(19) Europäisches Patentamt
European Patent Office
Office européen des brevets

(11) **EP 3 824 361 B1**

(12) **EUROPÄISCHE PATENTSCHRIFT**

(45) Veröffentlichungstag und Bekanntmachung des Hinweises auf die Patenterteilung:
**15.06.2022   Patentblatt 2022/24**

(21) Anmeldenummer: **19734334.6**

(22) Anmeldetag: **24.06.2019**

(51) Internationale Patentklassifikation (IPC):
**G05B 19/4103** (2006.01)

(52) Gemeinsame Patentklassifikation (CPC):
**G05B 19/4103;** G05B 2219/34098;
G05B 2219/34156; G05B 2219/42209;
G05B 2219/49284

(86) Internationale Anmeldenummer:
**PCT/EP2019/066605**

(87) Internationale Veröffentlichungsnummer:
**WO 2020/015952 (23.01.2020 Gazette 2020/04)**

(54) **VERFAHREN ZUM ERMITTELN EINER GROBBAHN AUS EINER VORGEGEBENEN KONTUR**

METHOD FOR DETERMINING A ROUGH TRAJECTORY FROM A PREDETERMINED CONTOUR

PROCÉDÉ DE DÉTERMINATION D'UNE TRAJECTOIRE APPROXIMATIVE À PARTIR D'UN CONTOUR PRÉDÉFINI

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.07.2018   DE 102018117245**

(43) Veröffentlichungstag der Anmeldung:
**26.05.2021   Patentblatt 2021/21**

(73) Patentinhaber: **KEBA Industrial Automation Germany GmbH**
**35633 Lahnau (DE)**

(72) Erfinder: **MARTIN, Frank**
**35633 Lahnau (DE)**

(74) Vertreter: **Spachmann, Holger**
**Stumpf Patentanwälte PartGmbB**
**Alte Weinsteige 73**
**70597 Stuttgart (DE)**

(56) Entgegenhaltungen:
**EP-A1- 1 963 935**

EP 3 824 361 B1

**Beschreibung**

Die vorliegende Erfindung betrifft ein Verfahren zum Ermitteln einer Grobbahn aus einer vorgegebenen Kontur für ein Ansteuern einer Bearbeitungsmaschine, welche zumindest zwei zueinander redundante Antriebsvorrichtungen zum Ausführen sich überlagernder Bewegungen aufweist.

STAND DER TECHNIK

Derartige Bearbeitungsmaschinen werden beispielsweise beim Fräsen, Laserschneiden, Wasserstrahlschneiden oder Gravieren von Holz-, Metall- oder Kunststoffwerkstücken oder als Zeichenmaschinen (Plotter) eingesetzt, um Werkstücke oder Zeichenlinien mit einer vorgegebenen zwei- oder dreidimensionalen Kontur herstellen zu können. Mithilfe der Antriebsvorrichtungen kann ein feststehendes oder auch ein bewegtes, insbesondere ein rotierendes Werkzeug entlang der vorgegebenen Kontur bewegt werden, so dass das Werkstück nach vollendeter Bearbeitung eine gewünschte Endkontur aufweist.

Je nach Verlauf der gewünschten Endkontur muss das Werkzeug oftmals innerhalb kurzer Zeit längere Wegstrecken zurücklegen und ist dadurch auch starken Beschleunigungs- und/oder Verzögerungskräften ausgesetzt. Bearbeitungsmaschinen, die lediglich eine einzige Antriebsvorrichtung für jede gewünschte Bewegungsrichtung des Werkzeugs aufweisen, gelangen hier schnell an ihre Leistungsgrenzen. Um die Geschwindigkeits- und/oder Beschleunigungsgrenzen der Antriebsvorrichtung einzuhalten, muss oftmals die Bearbeitungsgeschwindigkeit unter ein akzeptables Maß gesenkt werden.

Um dies zu vermeiden, werden sogenannte redundante Antriebsvorrichtungen für jede Bewegungsrichtung der Bearbeitungsmaschine eingesetzt. Hierfür ist zum einen ein niederdynamischer Antrieb vorgesehen, welcher relativ große Verfahrwege zurücklegen kann, aufgrund einer höheren Masse jedoch nur eine geringe Bewegungsdynamik aufweist. Zusätzlich ist ein zweiter, hochdynamischer Antrieb vorgesehen, welcher einerseits mittels des niederdynamischen Antriebs verfahren werden kann, und welcher andererseits in der Lage ist, das Werkzeug mit hoher Geschwindigkeit und hoher Beschleunigung bzw. Verzögerung zu verfahren, wobei jedoch der maximale Verfahrweg der hochdynamischen Antriebsvorrichtung in der Regel beschränkt ist.

Um eine solche Bearbeitungsmaschine mit redundanten Antriebsvorrichtungen für eine jeweilige Bewegungsrichtung ansteuern zu können, ist es üblich, die Kontur, mit welcher das Werkstück bearbeitet werden soll, in eine Grobbahn und eine Feinbahn aufzuteilen. Der niederdynamische Antrieb wird hierbei mit den Daten der Grobbahn angesteuert, während gleichzeitig der hochdynamische Antrieb mit den Daten der Feinbahn angesteuert wird.

Eine solche Aufteilung der Kontur in eine Grobbahn und eine Feinbahn und eine entsprechende Ansteuerung der Bearbeitungsmaschine ist grundsätzlich bekannt und ist beispielsweise in DE 103 55 614 B4 und EP 0 594 699 B1 beschrieben. Bei der Berechnung der Grobbahn ist zumindest der begrenzte Verfahrweg des hochdynamischen Antriebs zu berücksichtigen, da ansonsten eine fehlerhafte Bearbeitung des Werkstücks erfolgen würde. Vorteilhafterweise werden auch weitere limitierende Parameter bei der Bahnberechnung berücksichtigt. Dies hat in der Regel zur Folge, dass die Grobbahn eher niederfrequente Bewegungsanteile umfasst, während die Feinbahn hochfrequente Bewegungsanteile aufweist. In der Regel verläuft die Berechnung der Grobbahn und der Feinbahn derart, dass zunächst eine Grobbahn ermittelt wird und anschließend die Feinbahn durch Subtraktion der Grobbahn von der Kontur bestimmt wird.

Ein weiteres Ermittlungsverfahren für eine lagegeführt abzufahrende Grobbahn ist in EP 1 963 935 B1 beschrieben. Einem Rechner wird hierbei eine lagegeführt abzufahrende Anfangsbahn vorgegeben, wobei die Anfangsbahn durch eine Anfangsfunktion beschrieben ist, so dass durch Einsetzen eines skalaren Bahnparameters in die Anfangsfunktion jeweils eine korrespondierende Position auf der Anfangsbahn bestimmt ist, wobei der skalare Bahnparameter von der Zeit verschieden ist und für einen entlang der Anfangsbahn zurückgelegten Weg charakteristisch ist. Der Rechner unterzieht die Anfangsbahn als Funktion des skalaren Bahnparameters einer Filterung mit Tiefpasscharakteristik und ermittelt so eine Grobfunktion, so dass durch Einsetzen des skalaren Bahnparameters in die Grobfunktion jeweils eine korrespondierende Position auf der Grobbahn bestimmt ist. Die Tiefpasscharakteristik ist hier auf den skalaren Bahnparameter bezogen. Der Rechner ermittelt die Grobfunktion derart, dass der Abstand der Grobbahn von der Anfangsbahn unabhängig vom Wert des skalaren Bahnparameters stets unterhalb einer vorbestimmten Schranke liegt.

Mit anderen Worten wird in EP 1 963 935 B1 ein Verfahren zur Berechnung einer Grobfunktion, die von einem niederdynamischen Antrieb abzufahren wäre, vorgeschlagen, die dadurch berechnet wird, dass eine von einem Streckenparameter abhängige Anfangsbahn in Bezug auf diesen Streckenparameter tiefpassgefiltert wird. Die tiefpassgefilterte Funktion wird dahin gehend überprüft, ob ein Abstand dieser Funktion zu der Anfangsbahn über den gesamten Bereich des Streckenparameters unterhalb einer vorbestimmten Schranke liegt. Gegebenenfalls können ausgehend von der tiefpassgefilterten Funktion weitere Vergröberungen nach und nach vorgenommen werden, um die Grobbahn zu ermitteln, solange die vorgenannte Schranke eingehalten bleibt.

In der Dissertation "Steuerung von Werkzeugmaschinen mit redundanten Achsen" des Herren Marco Bock aus dem Fachbereich Mathematik und Informatik, Physik, Geographie der Justus-Liebig-Universität Gießen, vorgelegt im August 2010 (http://oeb.uni-giessen.de/geb/volltexte/2011/7970/pdf/BockMarco 2010 11 19.pdf) sind verschiedene weitere Verfahren zur Ermittlung einer Grobbahn aus einer vorgegebenen Kontur für die Ansteuerung einer Bearbeitungsmaschine beschrieben.

Gemäß einem ersten Ausführungsbeispiel können zur Ermittlung der Grobfunktion zunächst erste charakteristische Zwischenvektoren mit Kontrollpunkten einer Spline-Darstellung der Anfangsbahn ermittelt werden. Darauf aufbauend können zweite charakteristische Zwischenvektoren aus den ersten charakteristischen Zwischenvektoren der Spline-Darstellung ermittelt werden, die Kontrollpunkte enthalten und die eine zweite Zwischenbahn definieren. Die Kontrollpunkte können durch eine gewichtete oder ungewichtete Mittelwertbildung von je zwei unmittelbar aufeinanderfolgenden Zwischenvektoren der ersten Sequenz ermittelt werden. Darauf aufbauend können in entsprechender Weise dritte Zwischenvektoren berechnet werden. Nach dieser zweimaligen Bestimmung der Zwischenbahn muss nun ermittelt werden, ob ein geometrischer Abstand der Zwischenbahn als Grobfunktion von der Anfangsbahn unterhalb der vorgegebenen Schranke entlang des Bahnparameters liegt. Dazu können vereinfacht die Spline-Vektoren der Anfangsbahn mit den Spline-Vektoren der Zwischenbahn der Grobfunktion verglichen werden, wobei der Maximalwert dieser Abstände eine obere Abstandsgrenze ergibt, der wiederum mit der Schranke auf einer Einhaltung des vorgegebenen Kriteriums verglichen werden kann.

In einem zweiten Ausführungsbeispiel können ausgehend von einer Spline-Darstellung der Anfangsfunktion für eine Vielzahl von Skalarwerten des Bahnparameters jeweilige Bahnpositionen auf der Anfangsbahn ermittelt werden. Aus diesen Wertepaaren wird eine erste Zwischenbahn durch die vorgenannte Abtastung definiert. Eine zweite Zwischenbahn der Grobfunktion kann innerhalb des Intervalls des skalaren Bahnparameters durch gewichtete oder ungewichtete Mittelwertbildung der Positionen auf der ersten Zwischenbahn bestimmt werden. Die zweite Zwischenbahn kann hinsichtlich einer Einhaltung der Schranke mit der Anfangsbahn oder mit der ersten abgetasteten Zwischenbahn unter Berücksichtigung einer Hilfsschranke verglichen werden.

Abhängig von der vorgegebenen Kontur kann der Fall eintreten, dass die bekannten Bahnzerlegungsverfahren keine zufriedenstellenden Ergebnisse liefern können. Unter Umständen können die bekannten Verfahren sehr rechenintensiv sein und eine entsprechend lange Rechenzeit benötigen. Auch ist es denkbar, dass die aus der Bahnzerlegung resultierende Bearbeitungszeit nicht den physikalischen Möglichkeiten der Bearbeitungsmaschine entspricht und somit verlängert ist.

Es ist daher die Aufgabe der Erfindung, ein Verfahren der eingangs genannten Art anzugeben, welches gegenüber bekannten Verfahren verbessert ist.

OFFENBARUNG DER ERFINDUNG

Die Lösung der Aufgabe erfolgt durch ein Verfahren mit den Merkmalen des Anspruchs 1. Vorteilhafte Ausgestaltungen des Verfahrens sind in den abhängigen Ansprüchen angegeben.

Es wird ein Verfahren zum Ermitteln einer Grobbahn aus einer vorgegebenen Kontur für ein Ansteuern einer Bearbeitungsmaschine vorgeschlagen, welche zumindest zwei zueinander redundante Antriebsvorrichtungen zum Ausführen sich überlagernder Bewegungen aufweist, wobei die Kontur durch eine Konturfunktion $(P_j, p_j)$ bestimmt ist, welche abschnittsweise durch Konturknotenpunkte $P_o$ bis $P_{n+1}$ und jeweilige Konturabschnittsfunktionen $p_o$ bis $p_n$ definiert ist, wobei eine jeweilige Konturabschnittsfunktion $p_j$ zwei benachbarte Konturknotenpunkte $P_j$, $P_{j+i}$ verbindet, wobei die Grobbahn durch eine Grobbahnfunktion $(Q_j, q_j)$ bestimmt ist, welche abschnittsweise durch Grobbahnknotenpunkte $Q_o$ bis $Q_{n+1}$ und jeweilige Grobbahnabschnittsfunktionen $q_o$ bis $q_n$ definiert ist, wobei eine jeweilige Grobbahnabschnittsfunktion $q_j$ zwei benachbarte Grobbahnknotenpunkte $Q_j$, $Q_{j+1}$ verbindet, wobei für jeden Konturknotenpunkt $P_j$ ein jeweiliger zugeordneter Grobbahnknotenpunkt $Q_j$ derart ermittelt wird, dass eine Differenz der Steigungen, insbesondere ein Betrag der Differenz der Steigungen der beiden benachbarten Grobbahnabschnittsfunktionen $q_{j-1}$, $q_j$, die diesen Grobbahnknotenpunkt $Q_j$ enthalten, minimal wird, und dass der Abstand des Konturknotenpunkts $P_j$ von dem Grobbahnknotenpunkt $Q_j$ eine vorgegebene Abstandsbedingung erfüllt.

Die Konturknotenpunkte $P_j$ stellen zwei oder dreidimensionale Abtastpunkte $(x_j, yj)$ bzw. $(x_j, y_j, z_j)$ dar, die für j=0 bis n+1 die vorgegebene Kontur wiedergeben. Im Folgenden wird der zweidimensionale Fall betrachtet, der auch ins Dreidimensionale übertragen werden kann.

Das vorgeschlagene Verfahren ist mit geringem Rechenaufwand durchzuführen. Es liefert eine sehr glatte Grobbahnfunktion, die es ermöglicht, aufgrund der minimierten Steigungswechsel in den Grobbahnknotenpunkten die niederdynamische Antriebsvorrichtung mit möglichst hoher Geschwindigkeit und insbesondere mit geringen Beschleunigungs- bzw. Verzögerungswerten und niedrigen Ruckraten zu betreiben. Die vorgegebene Abstandsbedingung stellt dabei eine Nebenbedingung für das zu lösende Optimierungsproblem dar und stellt sicher, dass der Abstand zwischen der Grobbahn und der ursprünglichen Kontur innerhalb vorgegebener Grenzen bleibt.

Im Unterschied zum Stand der Technik wird bei dem erfindungsgemäßen Verfahren keine Tiefpassfilterung durch eine gewichtete oder ungewichtete Mittelwertbildung von einzelnen Werten vorgenommen. Zudem ist eine Überprüfung, ob der Abstand der Grobbahn von der Kontur unabhängig von einem Wert eines skalaren Bahnparameters stets unterhalb einer vorbestimmten Schranke liegt, nicht vorgesehen und auch nicht erforderlich, da bereits eine entsprechende Überprüfung inhärent durch die vorgegebene Abstandsbedingung, die der mathematischen Optimierung als Nebenbedingung zugrunde liegt, gegeben ist.

An dieser Stelle wird angemerkt, dass die genannte Kontur, welche die Grundlage der erfindungsgemäßen Bahnzerlegung darstellt, nicht zwingend die Endkontur des zu bearbeitenden Werkstücks darstellen muss. Gegebenenfalls kann hier noch zusätzlich ein Materialabtrag berücksichtigt werden, der beispielsweise durch das Werkzeug verursacht ist. So kann beispielsweise bei der Verwendung eines Fräsers der Durchmesser des Fräskopfs berücksichtigt werden.

Vorteilhafterweise umfasst die gegebene Abstandsbedingung, dass der Abstand zwischen dem Konturknotenpunkt $P_j$ und dem zugeordneten Grobbahnknotenpunkt Qj kleiner oder gleich einem vorbestimmten Grenzwert $\Delta$ ist. Dies stellt eine besondere Ausgestaltung der vorstehend erläuterten Nebenbedingung für die Lösung des Optimierungsproblems dar.

Der vorbestimmte Grenzwert $\Delta$ orientiert sich sinnvollerweise an dem Verfahrweg der hochdynamischen Antriebsvorrichtung.

Gemäß einer vorteilhaften Ausgestaltung ist die Konturfunktion ($P_j$, $p_j$) in mehreren Dimensionen definiert, wobei die Abstandsbedingung, wonach der Abstand zwischen dem Konturknotenpunkt $P_j$ und dem zugeordneten Grobbahnknotenpunkt Qj kleiner oder gleich einem vorbestimmten Grenzwert $\Delta$ ist, umfasst, dass in jeder Dimension der Abstand kleiner oder gleich einem vorbestimmten Grenzwert $\Delta$ für diese Dimension ist, wobei insbesondere die Grenzwerte $\Delta$ für alle Dimensionen gleich sind. Dadurch lässt sich die Ermittlung der Grobbahnknotenpunkte weiter vereinfachen, da jede Dimension für sich behandelt werden kann.

Gemäß einer weiteren vorteilhaften Ausgestaltung umfasst das Ermitteln des jeweiligen zugeordneten Grobbahnknotenpunkts Qj für jeden Konturknotenpunkt $P_j$, dass diejenigen Grobbahnknotenpunkte Qj ermittelt werden, für welche die Summe aller quadrierten Differenzen der Steigungen von zwei jeweils benachbarten Grobbahnabschnittsfunktionen $q_{j-1}$, $q_j$ der Grobbahnfunktion ($Q_j$, $q_j$) minimal wird. Diese Optimierung liefert besonders gute Ergebnisse hinsichtlich eines möglichst glatten Steigungsverlaufs der Grobbahnfunktion ($Q_j$, $q_j$). Dieses Optimierungsproblem lässt sich in einfacher Weise in eine Matrixdarstellung umformulieren und wird dann als quadratisches Problem oder quadratisches Programm bezeichnet. Geeignete Lösungsmethoden, insbesondere numerische Lösungsverfahren für ein derartiges Optimierungsproblem sind dem Fachmann wohlbekannt, Beispiele hiervon werden nachfolgend aufgezählt.

Vorteilhafterweise ist die Konturfunktion ($P_j$, $p_j$) in mehreren Dimensionen definiert, wobei das Ermitteln derjenigen Grobbahnknotenpunkte Qj, für welche die Summe aller quadrierten Differenzen der Steigungen von zwei jeweils benachbarten Grobbahnabschnittsfunktionen $q_{j-1}$, $q_j$ der Grobbahnfunktion ($Q_j$, $q_j$) minimal wird, umfasst, dass die Koordinaten der Grobbahnknotenpunkte Qj in jeder Dimension getrennt ermittelt werden. Demnach wird die genannte zu minimierende Summe ebenfalls getrennt für jede Dimension betrachtet. Hierdurch wird der Rechenaufwand nochmals reduziert.

Gemäß einer vorteilhaften Ausgestaltung werden die Grobbahnabschnittsfunktionen qo bis $q_n$ durch jeweilige lineare Funktionen gebildet. Mit anderen Worten werden die Grobbahnknotenpunkte Qo bis $Q_{n+1}$ jeweils durch Geraden verbunden. Hierdurch erübrigen sich aufwendige Interpolationsschritte, wodurch sich die Berechnungszeit für die Erzeugung der Grobbahn deutlich reduzieren lässt.

Alternativ ist es jedoch auch möglich, die Grobbahnabschnittsfunktionen qo bis $q_n$ mittels einer Spline-Interpolation der Grobbahnknotenpunkte $Q_0$ bis $Q_{n+1}$ zu erzeugen. Dadurch kann ein noch glatterer Verlauf der Grobbahn und damit ein noch ruckfreierer Betrieb der Antriebsvorrichtungen erreicht werden.

In der Regel kann durch einmalige Anwendung des Verfahrens aus der gesamten Kontur eine Grobbahn ermittelt werden. In vielen Fällen ist allerdings der Verlauf der Kontur nur abschnittsweise bekannt, und der weitere Verlauf bis zum Ende der Kontur für das Verfahren noch unbekannt, oder die Anzahl der Konturpunkte $P_j$ zu hoch für eine schnelle Anwendung des Verfahrens. Dazu wird vorteilhaft vorgeschlagen, das Verfahren iterativ einzusetzen, so dass zur Kontur abschnittsweise eine Grobbahn ermittelt werden kann. So kann in einer vorteilhaften Weiterbildung des Grobbahnermittlungsverfahrens ein erster Grobbahnabschnitt von Grobbahnknotenpunkten Qo bis $Q_{n0+1}$ und jeweiligen Grobbahnabschnittsfunktionen qo bis $q_{n0}$ aus den Konturpunkten Po bis $P_{n0+1}$, mit n0<n und k=0 bestimmt werden. Dabei ergibt sich der am weitest entfernte $P_{n0+1}$ durch die Abstandsnorm $\|P_{n0+1}-P_0\|_\infty > 2\Delta$. Der Abstand $\Delta$ kann beispielsweise ein maximaler (einseitiger) Verfahrweg einer Antriebsvorrichtung, bevorzugt der hochdynamischen Antriebsvorrichtung sein. Hiernach können in nachfolgenden Iterationen mit k>0 weitere Grobbahnabschnitte von Grobbahnknotenpunkten $Q_k$ bis $Q_{nk+1}$ und jeweiligen Grobbahnabschnittsfunktionen $q_k$ bis $q_{nk}$ mit nk=k+1,...,n und k<n bezüglich der Abstandbedingung $2\Delta$ zwischen den Punkten $P_k$ bis $P_{nk+1}$ bestimmt werden, d.h. $\|P_{nk+1}-P_k\|_\infty > 2\Delta$. Die Iterationen werden solange durchgeführt, bis nk=n ist.

Als Startpunkt für eine nachfolgende Iteration kann vorteilhafterweise zumindest der Grobbahnpunkt $Q_k$, bevorzugt zumindest die beiden Grobbahnpunkte $Q_{k-1}$, $Q_k$ des vorherigen Grobbahnabschnitts angesetzt werden, wobei ansonsten Konturpunkte $P_{k+1}$, bis $P_{nk+1}$ betrachtet werden.

Hierdurch kann eine Kontur abschnittsweise in eine Grobbahn überführt werden. Für einen ersten Konturab-

schnitt Po bis $P_{n0+1}$ wird das Verfahren vom Indexpunkt 0 bis zu einem Indexpunkt n0, der durch die Abstandsbedingung, dass Anfangs und Endpunkt Po und $P_{n0+1}$ einen Abstandsgrenzwert 2Δ nicht überschreitet, festgelegt wird, angewendet. Für einen nachfolgenden Grobbahnabschnitt kann als Startwert ein neuer Anfangswert k<nk eingesetzt werden, und wiederum auf Basis der Abstandsbedingung ausgehend vom Punkt $P_k$ wiederum ein davon maximal davon entfernten Punkt $P_{nk}$ definiert werden, der die Abstandsbedingung 2Δ erfüllt. Als Startpunkt für die nachfolgende Iteration wird zumindest der Grobbahnpunkt $Q_k$, insbesondere die beiden Punkten $Q_{k-1}$, $Q_k$ des vorangegangenen Grobbahnabschnitts verwendet. Hierdurch werden Sprünge beim Übergang von einem zum nächsten Grobbahnabschnitt vermieden, und die Steigung im Übergangsbereich minimiert.

Im vorangegangen Verfahren wird abschnittsweise die Grobbahn aufgebaut. Vorteilhaft hat sich erwiesen, wenn zur iterativen Berechnung von Grobbahnabschnittsfunktionen des Weiteren oder der weiteren Grobbahnabschnitte der Index k um einen Indexwert verschoben wird, und somit k:=k+1 für eine nachfolgende Iteration gilt. Hierdurch wird das Fenster des zu berechnenden Grobbahnabschnitts lediglich um den Abstand eines Konturpunkts $P_j$ verschoben. Somit werden zunächst Grobbahnpunkte Qo bis $Q_{n0+1}$ berechnet, wobei gemäß der Abstandsbedingung sich der Indexwert n0 mit $||P_{n0+1}-P_0||_\infty > 2\Delta$ ergibt, d.h. finde den kleinstmöglichen Indexwert n0, so dass der Konturpunkt $P_{n0+1}$ einen Abstand zum Anfangspunkt Po aufweist, der gerade größer als 2Δ ist. In der nächsten Iteration werden Grobbahnpunkte $Q_1$ bis $Q_{n1}$ etc., wobei sich der Indexwert n1 wiederum aus der Abstandsbedingung $||P_{n1+1}-P_1||_\infty > 2\Delta$ ergibt. Dabei setze vorteilhafterweise $Q_0$ und $Q_1$ des ersten Grobbahnabschnitts als Anfangswerte der zweiten Iteration anstelle der Punkte $P_0$ und $P_1$ ein. Somit werden für den nächsten Grobbahnabschnitt lediglich ein oder mehrere weitere Konturpunkte $P_j$ des ursprünglichen Konturverlaufs neu hinzugenommen, und der erste, oder die ersten Punkte $Q_0$ und $Q_1$ der vorherigen Iteration einbezogen. Damit definieren die zuvor berechneten Grobbahnpunkte $Q_{k-1}$ und $Q_k$ die Startpunkte des Grobbahnabschnitts der nachfolgenden Iteration und das Verfahren wird fortgesetzt, bis nk=n ist. Eine Verschiebung um 1 jedes weiteren Grobbahnabschnitts hat sich als optimal für die Bestimmung der Grobbahnfunktion herausgestellt.

ZEICHNUNGEN

Weitere Vorteile ergeben sich aus der Zeichnung und der zugehörigen Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird diese Merkmale zweckmäßigerweise auch einzeln betrachten und zu sinnvollen weiteren Kombinationen zusammenfassen.

Es zeigen:

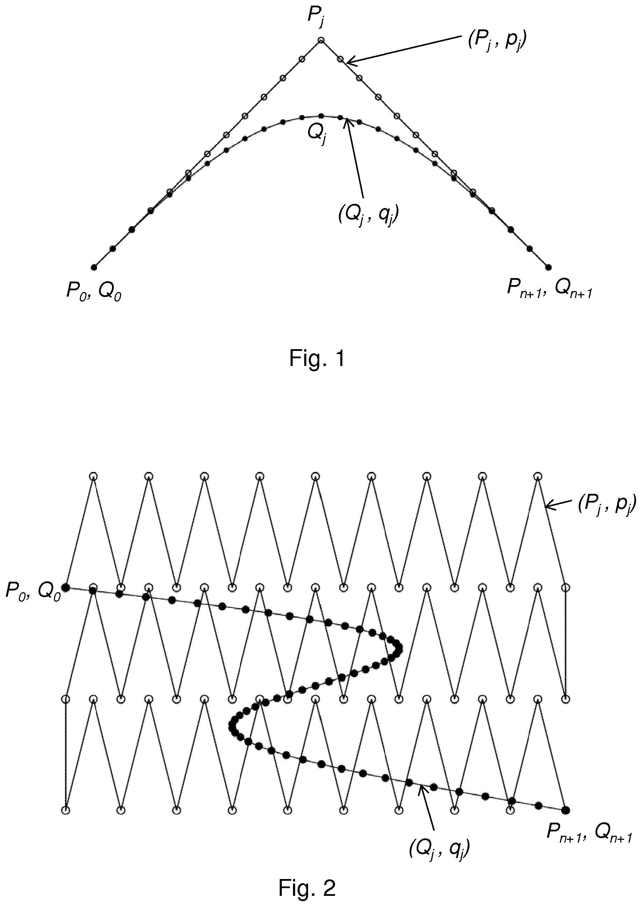

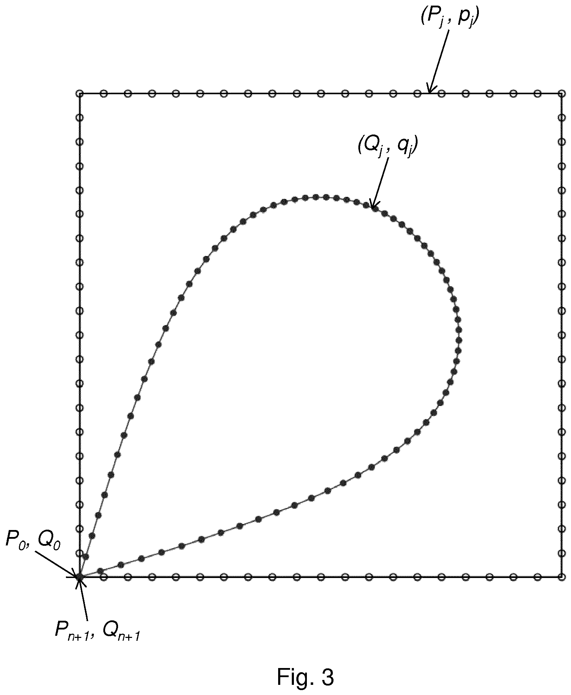

**Fig. 1 - 4**  schematische Darstellungen einer vorgegebenen Kontur und einer mittels des erfindungsgemäßen Verfahrens ermittelten zugehörigen Grobbahn.

Das erfindungsgemäße Verfahren wird nachfolgend beispielhaft anhand einer Bahnzerlegung einer zweidimensionalen Kontur beschrieben, die in einer Ebene (X, Y) definiert ist, wobei selbstverständlich eine Verallgemeinerung auf andere Dimensionen möglich ist. Die Bahnzerlegung erfolgt beispielsweise für eine Bearbeitungsmaschine, welche für jede Bewegungsrichtung zwei redundante Antriebsvorrichtungen aufweist. Die Kontur kann beispielsweise durch Splines ersten, dritten oder fünften Grades beschrieben sein, wie es für den Betrieb von CNC-Bearbeitungsmaschinen üblich ist. Es können jedoch auch andere Beschreibungen der Kontur vorliegen.

Ausgegangen wird von einer Kontur, welche zumindest durch Konturknotenpunkte $P_j = \left( x_j^0, y_j^0 \right)$, $j = 0, \ldots,$ n + 1 in einer Ebene (X, Y) definiert ist.

Eine Länge $s_j$ zwischen zwei benachbarten Konturknotenpunkten $P_j$, $P_{j+1}$ ist definiert durch:

$$s_j = \left|\left| P_{j+1} - P_j \right|\right|_2 = \sqrt{(x_{j+1}^0 - x_j^0)^2 + (y_{j+1}^0 - y_j^0)^2}, \qquad j = 0, \ldots, n$$

Vereinfachend wird angenommen, dass zwei benachbarte Konturknotenpunkte $P_j$, $P_{j+1}$ durch gerade Linien mit Steigungen

$$\mathrm{d}x_j^0 = \frac{x_{j+1}^0 - x_j^0}{s_j}, \qquad j = 0, \ldots, n$$

$$\mathrm{d}y_j^0 = \frac{y_{j+1}^0 - y_j^0}{s_j}, \qquad j = 0, \dots, n$$

verbunden sind. Eine Bahnzerlegung dieser Kontur erfolgt nun derart, dass eine Grobbahnfunktion $(Q_j, q_j)$ zur Ansteuerung einer niederdynamischen Antriebsvorrichtung, welche durch Grobbahnknotenpunkte $Q_j = (x_j, x_y)$, $j = 0, \dots, n + 1$ und die Grobbahnknotenpunkte $Q_j$ verbindende Grobbahnabschnittsfunktionen $q_j$, $j = 0, \dots, n$ definiert ist, einen glatten Verlauf aufweist und daher eine hohe Vortriebsgeschwindigkeit mit niedrigen Beschleunigungs- und Verzögerungswerten und einer geringen Ruckrate erlaubt. Um dies zu erreichen, muss die Differenz der Steigungen zweier benachbarter Grobbahnabschnittsfunktionen $q_{j-1}$, $q_j$, genauer gesagt der Absolutbetrag der Differenz der Steigungen $|dx_j - dx_{j-1}|$ bzw. $|dy_j - dy_{j-1}|$, in einem Grobbahnknotenpunkt $Q_j$ klein sein, um die gewünschten sanften Übergänge zu erhalten.

Da jeder Dimension x, y eine jeweilige Antriebsvorrichtung zugeordnet ist, können die Dimensionen x, y unabhängig voneinander betrachtet werden. Im Folgenden werden die nötigen Berechnungsschritte lediglich anhand der x-Komponente beschrieben. Die y- und gegebenenfalls z-Komponenten werden in entsprechender Weise ermittelt.

Die Bedingung, wonach die Steigungsänderung zwischen zwei benachbarten Grobbahnabschnittsfunktionen $q_{j-1}$, $q_j$ klein sein soll, lässt sich in äquivalenter Weise beispielsweise dadurch ausdrücken, dass eine Funktion

$$f(x) = \frac{1}{2}\sum_{j=1}^{n}(\mathrm{d}x_j - \mathrm{d}x_{j-1})^2$$

minimiert werden soll. Dies entspricht einer Methode der kleinsten Quadrate. Die Funktion f(x) lässt sich nach einigen Umformungen ausdrücken als

$$f(x) = \frac{1}{2}x^T Q x \,,$$

wobei Q eine dünn besetzte, symmetrische und positiv-semidefinite Bandmatrix ist, die reziproke Längeninformationen $s_j$ aufnimmt, und x ein Vektor $x = (x_0, \dots, x_{n+1})^T$ der einzelnen Komponenten bezeichnet.

Als Nebenbedingung für die Lösung dieses Optimierungsproblems müssen sich die Grobbahnknotenpunkte $Q_j$, $j = 0, \dots, n+1$ innerhalb eines vorgegebenen Fensters mit der Kantenlänge $\Delta$ um einen jeweiligen zugehörigen Konturknotenpunkt $P_j$ befinden. Dies lässt sich ausdrücken durch die Bedingung $\|Q_j - P_j\|_\infty \leq \Delta$ bzw. durch die Bedingungen:

$$\left|x_j - x_j^0\right| \leq \Delta,\ j = 0, \dots, n + 1,$$

$$\left|y_j - y_j^0\right| \leq \Delta\,,\ j = 0, \dots, n + 1,$$

wobei $\Delta$ im Regelfall mit den Verfahrgrenzen des hochdynamischen Feinantriebs korreliert. Die Antriebsvorrichtungen sollen beim Abfahren der Kontur beim Konturknotenpunkt $P_o$ starten und beim Konturknotenpunkt $P_{n+1}$ enden. Somit besteht die Aufgabe darin, Punkte $x_j$, $j = 0, \dots, n+1$ aufzufinden, welche die Funktion f(x) unter den genannten Nebenbedingungen minimiert. Dieses Problem lässt sich schreiben als

$$f(x) = \frac{1}{2}x^T Q x \ \rightarrow min$$

$$x_0 = x_0^0$$

$$x_j^0 - \Delta \leq x_j \leq x_j^0 + \Delta$$

$$x_{n+1} = x_{n+1}^0$$

was als quadratisches Optimierungsproblem oder quadratisches Programm bekannt ist.

Für dieses Optimierungsproblem sind dem Fachmann zahlreiche schnelle Lösungsmethoden bekannt. Beispielhaft seien hier numerische Verfahren wie Gradientenverfahren, Active-Set-Methoden, Innere-Punkte-Verfahren oder die Klasse der Krylow-Unterraum-Verfahren, insbesondere Verfahren der konjugierten Gradienten, genannt.

Nachdem auf diese Weise die Grobbahnknotenpunkte $Q_0$, $Q_{j+1}$ ermittelt wurden, können durch Verbinden benachbarter Grobbahnknotenpunkte $Q_j$, $Q_{j+1}$ durch Geraden (entspricht einer Spline-Interpolation erstens Grades) oder durch eine Spline-Interpolation dritten oder höheren Grades die Grobbahnabschnittsfunktionen qo bis $q_j$ bestimmt werden.

In den Fig. 1 bis 3 sind jeweils beispielhafte Konturfunktionen $(P_j, p_j)$ mit Anfangspunkten Po und Endpunkten $P_{n+1}$ sowie die gemäß dem erfindungsgemäßen Verfahren ermittelten Grobbahnfunktionen $(Q_j, q_j)$ nebst den zugehörigen Anfangspunkten $Q_0$ und Endpunkten $Q_{n+1}$ dargestellt.

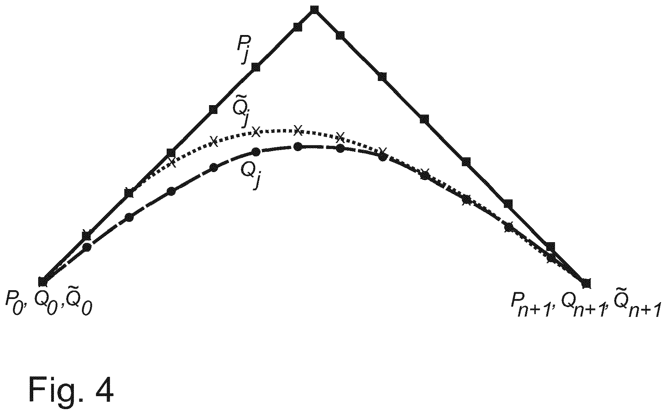

Die Fig. 4 stellt ein Beispiel einer Grobbahnbestimmung analog zur Fig. 1 dar. Ausgehend von der Konturfunktionen $(P_j, p_j)$, dargestellt durch eine durchgezogene Linie, kann durch eine einzelne Verfahrensanwendung die gesamte Konturfunktionen bis zum Index n in eine Grobbahn $(Q_j, q_j)$ - gestrichelt dargestellt - umgewandelt werden. Dies ist bereits in Fig. 1 dargestellt.

In einer iterativen Anwendung des Verfahrens kann die Konturfunktion in Unterabschnitte k bis $n_k$ mit $n_k$ =k+1, ... ,n und k<n unterteilt werden, wobei der jeweilig höchste Indexwert $n_k$ eine Abstandsbedingung 2Δ erfüllt. Dabei kann die Größe des jeweiligen Grobkonturabschnitts so ausgewählt werden, dass dieser einen gesamten Bewegungsraum des hochdynamischen Antriebs entspricht. Somit gilt ausgehend von einem Anfangspunkt $P_k$ für die Festlegung von nk für die Menge der zu betrachteten Konturpunkte des jeweiligen Grobkonturabschnitts:

$$\left\|P_{nk} - P_k\right\|_\infty > 2\Delta$$

Für die erste Iteration werden Konturpunkte Po bis $P_{n0+1}$ betrachtet, d.h. k=0 und gemäß der Abstandsbedingung der Indexwert n0 gesucht, der gerade der Abstandsbedingung mit Abstand 2Δ vom Punkt Po bis zum Punkt $P_{n0}$ entspricht. Durch die Anwendung des Verfahrens werden hieraus erste Grobbahnpunkte $Q_0$ bis $Q_{n0+1}$ bestimmt.

Für jede weitere Iteration wird k:=k+1 gesetzt und wiederum der maximale Index $n_k$ mit nk=k+1, ..., n gesucht, wobei der nachfolgende Grobbahnabschnitt um Indexwertabstand 1 versetzt, d.h. k:=k+1 berechnet wird. So wird für die zweite Iteration Grobbahnpunkte von 1 bis n1 und nachfolgende Iterationen j die Punkte j bis nj bestimmt, wobei als Startpunkt(e) jedes Grobkonturabschnitts der oder die Grobpunkte $Q_{k-1}$, $Q_k$ des vorangegangenen Grobkonturabschnitts eingesetzt werden, und ansonsten die Konturpunkte $P_{k+1}$ bis $P_{nk+1}$ betrachtet werden. Es fließen somit in jeden nachfolgenden Grobkonturabschnitt der oder die ersten Grobpunkte des zuvor berechneten Grobkonturabschnitts ein und bleiben dabei unverändert, wobei sich das Indexfenster jeweils um einen Indexwert k:=k+1 verschiebt. Letztlich wird in jeder nachfolgenden Iteration, da der Indexwert k um 1 erhöht wird, nur ein weiterer Grobbahnpunkt hinzugefügt, bis nk=n ist. Das Verfahren kann maximal n-mal angewendet werden. Dadurch, dass als Anfangspunkte der nachfolgenden Abschnitts zumindest der erste, bevorzugt die ersten beiden Grobbahnpunkte, oder mehrere ersten Grobbahnpunkte des vorangegangenen Abschnitts eingesetzt werden, kann sichergestellt werden, dass beim Übergang eines Grobkonturabschnitts zum nächsten die Grobbahnsteigung im Übergangsbereich minimiert wird.

Die aus dem iterativen Verfahren hervorgehende Grobbahnkurve mit Grobbahnpunkten $\overline{Q}_j$ ist strichpunktiert dargestellt, und mit Grobbahnpunkte $Q_j$, die nur beim einmaligen Anwenden des Verfahrens auf alle Punkte $P_0$ bis $P_{n+1}$-siehe Fig. 1 - verglichen. Es wird deutlich, dass eine verbesserte Annäherung an die Ausgangskontur erreicht werden kann, wobei eine erhöhte Anzahl von Iterationen auf eine reduzierte Zahl von Konturpunkten erforderlich wird.

**Patentansprüche**

1.  Verfahren zum Ermitteln einer Grobbahn aus einer vorgegebenen Kontur für ein Ansteuern einer Bearbeitungsmaschine, welche zumindest zwei zueinander redundante Antriebsvorrichtungen zum Ausführen sich überlagernder Bewegungen aufweist,

    wobei die Kontur durch eine Konturfunktion $(P_j, p_j)$ bestimmt ist, welche abschnittsweise durch Konturknotenpunkte $(P_0$ bis $P_{n+1})$ und jeweilige Konturabschnittsfunktionen $(p_0$ bis $p_n)$ definiert ist, wobei eine jeweilige Konturabschnittsfunktion $(p_j)$ zwei benachbarte Konturknotenpunkte $(P_j, P_{j+1})$ verbindet,
    wobei die Grobbahn durch eine Grobbahnfunktion $(Q_j, q_j)$ bestimmt ist, welche abschnittsweise durch Grob-

bahnknotenpunkte ($Q_0$ bis $Q_{n+1}$) und jeweilige Grobbahnabschnittsfunktionen ($q_0$ bis $q_n$) definiert ist, wobei eine jeweilige Grobbahnabschnittsfunktion ($q_j$) zwei benachbarte Grobbahnknotenpunkte ($Q_j$, $Q_{j+1}$) verbindet, wobei für jeden Konturknotenpunkt ($P_j$) ein jeweiliger zugeordneter Grobbahnknotenpunkt ($Q_j$) derart ermittelt wird, dass eine Differenz der Steigungen der beiden benachbarten Grobbahnabschnittsfunktionen($q_{j-1}$, $q_j$), die diesen Grobbahnknotenpunkt ($Q_j$) enthalten, minimal wird, und dass der Abstand des Konturknotenpunkts ($P_j$) von dem Grobbahnknotenpunkt ($Q_j$) eine vorgegebene Abstandsbedingung erfüllt.

2. Verfahren nach Anspruch 1, **dadurch gekennzeichnet, dass** die vorgegebene Abstandsbedingung umfasst, dass der Abstand zwischen dem Konturknotenpunkt ($P_j$) und dem zugeordneten Grobbahnknotenpunkt ($Q_j$) kleiner oder gleich einem vorbestimmten Grenzwert ($\Delta$) ist.

3. Verfahren nach Anspruch 1 oder 2, **dadurch gekennzeichnet, dass** die Konturfunktion ($P_j$, $p_j$) in mehreren Dimensionen definiert ist, und dass die Abstandsbedingung, wonach der Abstand zwischen dem Konturknotenpunkt ($P_j$) und dem zugeordneten Grobbahnknotenpunkt ($Q_j$) kleiner oder gleich einem vorbestimmten Grenzwert ($\Delta$) ist, umfasst, dass in jeder Dimension der Abstand kleiner oder gleich einem vorbestimmten Grenzwert ($\Delta$) für diese Dimension ist, wobei insbesondere die Grenzwerte ($\Delta$) für alle Dimensionen gleich sind.

4. Verfahren nach Anspruch 2 oder 3, **dadurch gekennzeichnet, dass** der oder die Grenzwerte ($\Delta$) einem jeweiligen maximalen Verfahrweg einer der Antriebsvorrichtungen entspricht.

5. Verfahren nach einem der vorhergehenden Ansprüche, **dadurch gekennzeichnet, dass** das Ermitteln des jeweiligen zugeordneten Grobbahnknotenpunkts ($Q_j$) für jeden Konturknotenpunkt ($P_j$) umfasst, dass diejenigen Grobbahnknotenpunkte ($Q_j$) ermittelt werden, für welche die Summe aller quadrierten Differenzen der Steigungen von zwei jeweils benachbarten Grobbahnabschnittsfunktionen ($q_{j-1}$, $q_j$) der Grobbahnfunktion ($Q_j$, $q_j$) minimal wird.

6. Verfahren nach Anspruch 5, **dadurch gekennzeichnet, dass** die Konturfunktion ($P_j$, $p_j$) in mehreren Dimensionen definiert ist, und dass das Ermitteln derjenigen Grobbahnknotenpunkte (Qj), für welche die Summe aller quadrierten Differenzen der Steigungen von zwei jeweils benachbarten Grobbahnabschnittsfunktionen ($q_{j-1}$, $q_j$) der Grobbahnfunktion ($Q_j$, $q_j$) minimal wird, umfasst, dass die Koordinaten der Grobbahnknotenpunkte ($Q_j$) in jeder Dimension getrennt ermittelt werden.

7. Verfahren nach einem der vorhergehenden Ansprüche, **dadurch gekennzeichnet, dass** die Grobbahnabschnittsfunktionen (qo bis $q_n$) durch jeweilige lineare Funktionen gebildet werden.

8. Verfahren nach einem der Ansprüche 1 bis 6, **dadurch gekennzeichnet, dass** die Grobbahnabschnittsfunktionen (qo bis $q_n$) mittels einer Spline-Interpolation der Grobbahnknotenpunkte (Qo bis $Q_{n+1}$) erzeugt werden.

9. Verfahren nach einem der vorgenannten Ansprüche, **dadurch gekennzeichnet, dass** ein erster Grobbahnabschnitt von Grobbahnknotenpunkten (Qo bis $Q_{n0+1}$) und jeweiligen Grobbahnabschnittsfunktionen (qo bis $q_{n0}$) bezüglich einer Abstandbedingung ($2\Delta$) vom Startpunkt Po bis $P_{n0+1}$, mit n0<n und k=0 in einer erste Iteration bestimmt wird, und in nachfolgenden Iterationen mit k>0 weitere Grobbahnabschnitte von Grobbahnknotenpunkten ($Q_k$ bis $Q_{nk+1}$) und jeweiligen Grobbahnabschnittsfunktionen ($q_k$ bis $q_{nk}$) mit nk=k+1, ... ,n und k<n bezüglich der Abstandbedingung ($2\Delta$) zwischen den Konturknotenpunkten $P_k$ bis $P_{nk+1}$ bestimmt werden, solange bis nk=n ist, wobei als Startpunkt für eine nachfolgende Iteration zumindest der Grobbahnpunkt $Q_k$, bevorzugt zumindest die beiden Grobbahnpunkte $Q_{k-1}$, $Q_k$ angesetzt werden.

10. Verfahren nach Anspruch 9, **dadurch gekennzeichnet, dass** zur iterativen Berechnung nachfolgender Grobbahnabschnitte der weiteren Grobbahnknotenpunkten ($Q_k$ bis $Q_{nk+1}$) und jeweiligen Grobbahnabschnittsfunktionen ($q_k$ bis $q_{nk}$) der Index k um 1 verschoben wird, und somit k:=k+1 für eine nachfolgende Iteration gilt.

**Claims**

1. A method for ascertaining a rough trajectory from a specified contour for controlling a machine tool which has at least two mutually redundant drive devices for carrying out superimposed movements,

   wherein the contour is determined by a contour function ($P_j$, $p_j$) which is defined in portions by contour nodal points (Po to $P_{n+1}$) and respective contour portion functions (po to $p_n$), wherein a respective contour portion

function ($p_j$) connects two adjacent contour nodal points ($P_j$, $P_{j+1}$),
wherein the rough trajectory is determined by a rough trajectory function ($Q_j$, $q_j$) which is defined in portions by rough trajectory nodal points ($Q_o$ to $Q_{n+1}$) and respective rough trajectory portion functions ($q_o$ to $q_n$), wherein a respective rough trajectory portion function ($q_j$) connects two adjacent rough trajectory nodal points ($Q_j$, $Q_{j+1}$), wherein, for each contour nodal point ($P_j$), a respective assigned rough trajectory nodal point ($Q_j$) is ascertained in such a manner that a difference in the gradients of the two adjacent rough trajectory portion functions ($q_{j-1}$, $q_j$) which contain this rough trajectory nodal point ($Q_j$) is minimal and that the distance of the contour nodal point ($P_j$) from the rough trajectory nodal point ($Q_j$) satisfies a specified distance condition.

2. A method according to Claim 1, **characterised in that** the specified distance condition requires that the distance between the contour nodal point ($P_j$) and the assigned rough trajectory nodal point ($Q_j$) is less than or equal to a predetermined limit value ($\Delta$).

3. A method according to Claim 1 or 2, **characterised in that** the contour function ($P_j$, $p_j$) is defined in a plurality of dimensions and **in that** the distance condition, according to which the distance between the contour nodal point ($P_j$) and the assigned rough trajectory nodal point ($Q_j$) is less than or equal to a predetermined limit value ($\Delta$), requires that in each dimension the distance is less than or equal to a predetermined limit value ($\Delta$) for this dimension, wherein in particular the limit values ($\Delta$) are equal for all dimensions.

4. A method according to Claim 2 or 3, **characterised in that** the limit value(s) ($\Delta$) corresponds/correspond to a respective maximum displacement of one of the drive devices.

5. A method according to one of the preceding claims, **characterised in that** ascertaining the respective assigned rough trajectory nodal point ($Q_j$) for each contour nodal point ($P_j$) requires that those rough trajectory nodal points ($Q_j$) for which the sum of all the squared differences between the gradients of two in each case adjacent rough trajectory portion functions ($q_{j-1}$, $q_j$) of the rough trajectory function ($Q_j$, $q_j$) is minimal are ascertained.

6. A method according to Claim 5, **characterised in that** the contour function ($P_j$, $p_j$) is defined in a plurality of dimensions and **in that** ascertaining those rough trajectory nodal points ($Q_j$) for which the sum of all the squared differences between the gradients of two in each case adjacent rough trajectory portion functions ($q_{j-1}$, $q_j$) of the rough trajectory function ($Q_j$, $q_j$) is minimal requires that the coordinates of the rough trajectory nodal points ($Q_j$) are separately ascertained in each dimension.

7. A method according to one of the preceding claims, **characterised in that** the rough trajectory portion functions ($q_o$ to $q_n$) are formed by respective linear functions.

8. A method according to one of claims 1 to 6, **characterised in that** the rough trajectory portion functions ($q_o$ to $q_n$) are generated by means of a spline interpolation of the rough trajectory nodal points ($Q_o$ to $Q_{n+1}$).

9. A method according to one of the above-stated claims, **characterised in that** a first rough trajectory portion of rough trajectory nodal points ($Q_o$ to $Q_{n0+1}$) and respective rough trajectory portion functions ($q_0$ to $q_{n0}$) is determined in a first iteration with regard to a distance condition ($2\Delta$) from the starting point $P_0$ to $P_{n0+1}$, with n0<n and k=0, and in subsequent iterations with k>0 further rough trajectory portions of rough trajectory nodal points ($Q_k$ to $Q_{nk+1}$) and respective rough trajectory portion functions ($q_k$ to $q_{nk}$) with nk=k+1, ... ,n and k<n are determined with regard to the distance condition ($2\Delta$) between contour nodal points $P_k$ to $P_{nk+1}$, until nk=n, wherein at least the rough trajectory point $Q_k$, preferably at least the two rough trajectory points $Q_{k-1}$, $Q_k$, are set as the starting point for a subsequent iteration.

10. A method according to Claim 9, **characterised in that,** for the iterative calculation of subsequent rough trajectory portions of the further rough trajectory nodal points ($Q_k$ to $Q_{nk+1}$) and respective rough trajectory portion functions ($q_k$ to $q_{nk}$), the index k is shifted by 1 and thus k:=k+1 applies for a subsequent iteration.

**Revendications**

1. Procédé de détermination d'une trajectoire approximative à partir d'un contour pré-défini pour la commande d'une machine d'usinage qui présente au moins deux dispositifs d'entraînement redondants l'un par rapport à l'autre pour exécuter des mouvements se superposant, sachant que le contour est déterminé par une fonction de contour ($P_j$,

$p_j$) qui est définie section par section par des points de contour (Po à $P_{n+1}$) et les fonctions respectives de section de contour (po à $p_n$), sachant qu'une fonction respective de section de contour ($p_j$) relie deux points de contour voisins ($P_j$, $P_{j+1}$), sachant que la trajectoire approximative est déterminée par une fonction de trajectoire approximative ($Q_j$, $q_j$) qui est définie section par section par des points de trajectoire approximative (Qo à $Q_{n+1}$) et les fonctions respectives de section de trajectoire approximative (qo à $q_n$), sachant qu'une fonction respective de trajectoire approximative ($q_j$) relie deux points voisins de trajectoire approximative ($Q_j$, $Q_{j+1}$), sachant qu'un point respectif attribué de trajectoire approximative ($Q_j$) est déterminé pour chaque point de contour ($P_j$) de sorte qu'une différence des pentes des deux fonctions voisines de section de trajectoire approximative ($q_{j-1}$, $q_j$) qui contiennent ce point de trajectoire approximative ($Q_j$) devient minimale et que l'écart entre le point de contour ($P_j$) et le point de trajectoire approximative ($Q_j$) remplit une condition d'écart prédéfinie.

2. Procédé selon la revendication 1, **caractérisé en ce que** la condition d'écart prédéfinie comprend le fait que l'écart entre le point de contour ($P_j$) et le point attribué de trajectoire approximative ($Q_j$) est inférieur ou égal à une valeur limite prédéterminée ($\Delta$).

3. Procédé selon la revendication 1 ou 2, **caractérisé en ce que** la fonction de contour ($P_j$, $p_j$) est définie dans plusieurs dimensions, et que la condition d'écart selon laquelle l'écart entre le point de contour ($P_j$) et le point attribué de trajectoire approximative ($Q_j$) est inférieur ou égal à une valeur limite prédéterminée ($\Delta$), comprend le fait que dans chaque dimension, l'écart est inférieur ou égal à une valeur limite prédéterminée ($\Delta$) pour cette dimension, sachant que notamment les valeurs limites ($\Delta$) sont égales pour toutes les dimensions.

4. Procédé selon la revendication 2 ou 3, **caractérisé en ce que** la ou les valeurs limites ($\Delta$) correspondent à une course respective maximale d'un des dispositifs d'entraînement.

5. Procédé selon une des revendications précédentes, **caractérisé en ce que** la détermination du point respectif attribué de trajectoire approximative ($Q_j$) pour chaque point de contour ($P_j$) comprend le fait que sont déterminés les points de trajectoire approximative ($Q_j$) pour lesquels la somme de toutes les différences élevées au carré des pentes de deux fonctions respectivement voisines de section de trajectoire approximative ($q_{j-1}$, $q_j$) de la fonction de trajectoire approximative ($Q_j$, $q_j$) devient minimale.

6. Procédé selon la revendication 5, **caractérisé en ce que** la fonction de contour ($P_j$, $p_j$) est définie dans plusieurs dimensions et que la détermination des points de trajectoire approximative ($Q_j$) pour lesquels la somme de toutes les différences élevées au carré des pentes de deux fonctions respectivement voisines de section de trajectoire approximative ($q_{j-1}$, $q_j$) de la fonction de trajectoire approximative ($Q_j$, $q_j$) devient minimale, comprend le fait que les coordonnées des points de trajectoire approximative ($Q_j$) sont déterminées séparément dans chaque dimension.

7. Procédé selon une des revendications précédentes, **caractérisé en ce que** les fonctions de section de trajectoire approximative (qo à $q_n$) sont formées par des fonctions linéaires respectives.

8. Procédé selon une des revendications 1 à 6, **caractérisé en ce que** les fonctions de section de trajectoire approximative (qo à $q_n$) sont créées au moyen d'une interpolation de type spline des points de trajectoire approximative (Qo à $Q_{n+1}$).

9. Procédé selon une des revendications précédentes, **caractérisé en ce qu'**une première section de trajectoire approximative des points de trajectoire approximative (Qo à $Q_{n0+1}$) et des fonctions respectives de trajectoire approximative (qo à $q_{n0}$) est déterminée concernant une condition d'écart ($2\Delta$) à partir du point initial $P_0$ jusqu'à $P_{n0+1}$, dans une première itération avec n0<n et k=0, et que dans les itérations suivantes avec k>0, d'autres sections de trajectoire approximative des points de trajectoire approximative ($Q_k$ à $Q_{nk+1}$) et des fonctions respectives de section de trajectoire approximative ($q_k$ à $q_{nk}$) sont déterminées avec nk=k+1, ... , n et k<n concernant les conditions d'écart ($2\Delta$) entre les points de contour $P_k$ à $P_{nk+1}$ jusqu'à ce que nk=n, sachant que sont choisis comme point initial pour une itération suivante au moins le point de trajectoire approximative $Q_k$, de préférence au moins les deux points de trajectoire approximative $Q_{k-1}$, $Q_k$.

10. Procédé selon la revendication 9, **caractérisé en ce que** pour le calcul itératif des sections suivantes de trajectoire approximative des autres points de trajectoire approximative ($Q_k$ à $Q_{nk+1}$) et des fonctions respectives de section de trajectoire approximative ($q_k$ à $q_{nk}$), l'indice k est décalé de 1 et qu'ainsi k:=k+1 pour une itération suivante.

Fig. 1

Fig. 2

Fig. 3

Fig. 4

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 10355614 B4
- EP 0594699 B1

- EP 1963935 B1

### In der Beschreibung aufgeführte Nicht-Patentliteratur

- Steuerung von Werkzeugmaschinen mit redundanten Achsen. **HERREN MARCO BOCK.** Fachbereich Mathematik und Informatik, Physik, Geographie. Justus-Liebig-Universität Gießen